# EUROPÄISCHE PATENTANMELDUNG

(11) **EP 0 666 436 A1**
(43) Veröffentlichungstag der Anmeldung: **09.08.1995**
(21) Anmeldenummer: 95100797.0
(22) Anmeldetag: 21.01.1995
(51) Int. Cl.: F16H 61/36

(54) **Betätigungseinrichtung insbesondere für Wechselgetriebe**

(30) Priorität: 02.02.1994 DE 9401671 U
(71) Anmelder: VOFA-WERK XAVIER VORBRÜGGEN GmbH & Co. KG, D-40549 Düsseldorf (DE)
(72) Erfinder:
(74) Vertreter: Paul, Dieter-Alfred, Dipl.-Ing.

(57) **Zusammenfassung**

Eine Betätigungseinrichtung weist einen Übertragungsmechanismus (22, 86) auf, der mit einem Betätigungshebel (2, 84) und mit einem Koppelelement (57) versehen ist, wobei der Betätigungshebel (2, 84) in einer ersten Richtung in mehreren Betätigungsebenen (37, 38, 39) bewegbar und in jeder Betätigungsebene (37, 38, 39) in einer zweiten Richtung verschwenkbar ist und die Bewegungen des Betätigungshebels (2, 84) in beiden Richtungen mit Hilfe des Übertragungsmechanismusses (22, 86) derart auf das Koppelelement (57) übertragbar sind, daß es ebenfalls in zwei Richtungen bewegbar ist. Erfindungsgemäß weist der Übertragungsmechanismus einen Betätigungszug (22, 86) mit einer Betätigungsseele (24, 89) und einen diese umgebenden Betätigungsmantel (23, 87) als Betätigungsglieder auf, wobei der Betätigungshebel (2, 84) und das Koppelelement (57) mit wenigstens einem der Betätigungsglieder derart verbunden ist, daß mit der Bewegung des Betätigungshebels (2, 84) in dessen einer Richtung eine Verschiebebewegung wenigstens eines Betätigungsgliedes und damit eine Bewegung des Koppelelements (57) in dessen einer Richtung und daß mit der Bewegung des Betätigungshebels (2, 84) in dessen anderer Richtung eine Verdrehbewegung wenigstens eines Betätigungsgliedes und damit eine Bewegung des Koppelelements (57) in dessen anderer Richtung bewirkbar ist.

## Beschreibung

Die Erfindung betrifft eine Betätigungseinrichtung, insbesondere Schalteinrichtung für Wechselgetriebe, mit einem Übertragungsmechanismus, der einerends mit einem Betätigungshebel, insbesondere Schalthebel, und anderenends mit einem Koppelelement für die Verbindung mit einem zu betätigenden Organ, insbesondere Getriebegestänge, versehen ist, wobei der Betätigungshebel in einer ersten Richtung in mehrere Betätigungsebenen bewegbar und in jeder Betätigungsebene in einer zweiten Richtung verschwenkbar ist und die Bewegungen des Betätigungshebels in beiden Richtungen mit Hilfe des Übertragungsmechanismusses derart auf das Koppelelement übertragbar sind, daß es ebenfalls in zwei Richtungen bewegbar ist.

Die nicht automatischen Wechselgetriebe in Fahrzeugen werden gewöhnlich mit Hilfe eines neben dem Fahrersitz angeordneten Schalthebels betätigt. In der Neutralstellung, d.h. bei nicht geschaltetem Gang, kann der Schalthebel seitlich, d. h. in Wählrichtung querverschwenkt werden, um in zumindest zwei Schaltebenen zu gelangen. In jeder Schaltebene kann dann der Schalthebel zur Durchführung eines Schaltvorgangs in Schaltrichtung vor- oder zurückbewegt werden.

Die Bewegungen des Schalthebels sowohl in Wählrichtung als auch in Schaltrichtung werden mit Hilfe eines Übertragungsmechnismusses auf ein Koppelelement übertragen. Dies sitzt verschiebe- und drehfest auf einem in das Getriebe hineingehenden Getriebegestänge. Die Verbindung des Übertragungsmechanismusses mit dem Schalthebel und dem Koppelelement ist so gestaltet, daß eine Bewegung des Schalthebels in Schaltrichtung zu einer Verschwenkung des Koppelelements und damit zu einer Verdrehung des Getriebegestänges führt, während eine Bewegung des Schalthebels in Wählrichtung eine Bewegung des Koppelelements und damit des Getriebegestänges in dessen axialer Richtung zur Folge hat.

Bei den bekannten Schalteinrichtungen besteht der Übertragungsmechanismus aus einem Übertragungsgestänge. Ein solches Gestänge läßt zwar eine exakte Übertragung der Bewegung des Schalthebels auf das Koppelelement zu. Es bereitet jedoch Schwierigkeiten, den Schalthebel von den Bewegungen des Motors zu entkoppeln. Da Kraftfahrzeugmotoren heutzutage zwecks Vermeidung der Übertragung von Schwingungen und Geräuschen relativ weich aufgehängt werden, kommt es zwangsläufig zu Übertragungen der Motorbewegungen und -schwingungen auf den Schalthebel, was unerwünscht ist. Hinzu kommt, daß die Montage und Einstellung eines Übertragungsgestänges aufwendig ist.

Der Erfindung liegt deshalb die Aufgabe zugrunde, eine Betätigungseinrichtung der eingangs genannten Art so zu gestalten, daß sie möglichst einfach ausgebildet und montierbar ist und daß eine Übertragung der Bewegung z. B. eines Getriebes dennoch verhindert wird.

Diese Aufgabe wird erfindungsgemäß dadurch gelöst, daß der Übertragungsmechanismus einen Betätigungszug mit einer Betätigungsseele und einem diese umgebenden Betätigungsmantel als Betätigungsglieder aufweist und daß der Betätigungshebel und das Koppelelement mit wenigstens einem der Betätigungsglieder derart verbunden ist, daß mit der Bewegung des Betätigungshebels in dessen einer Richtung eine Verschiebebewegung wenigstens eines Betätigungsgliedes und damit eine Bewegung des Koppelements in dessen einer Richtung und daß mit der Bewegung des Betätigungshebels in dessen anderer Richtung eine Verdrehbewegung wenigstens eines Betätigungsgliedes und damit eine Bewegung des Koppelelements in dessen anderer Richtung bewirkbar ist. Dabei kommen als Betätigungszüge insbesondere Drahtzüge in Frage, welche einen flexiblen Betätigungsmantel und einen darin axial geführten Betätigungsdraht aufweisen.

Der Grundgedanke der Erfindung besteht darin, als Übertragungsmechanismus einen Betätigungszug einzusetzen, der sowohl zur Kraftübertragung von Zug und Druck als auch zur Torsionskraftübertragung eingesetzt wird. Es hat sich gezeigt, daß eine solche kombinierte Kraftübertragung auch mit Betätigungszügen trotz deren Flexibilität mit einer z. B. für eine Gangschaltung hinreichend exakten Funktion einsetzbar sind. Solche Betätigungszüge haben den Vorzug, daß Bewegungen z. B. eines Getriebes aufgrund ihrer Flexibilität nicht auf den Schalthebel übertragen werden und daß sie keine Anpassung bezüglich der Anordnung von Getriebe und Schalthebel erfordern. Außerdem sind solche Betätigungszüge einfacher und schneller zu montieren und auszuwechseln.

Der Grundgedanke der Erfindung läßt sich auf verschiedene Weise verwirklichen, was die Kraftübertragung durch den Betätigungszug angeht. So besteht die Möglichkeit, daß Schalthebel und Koppelelement nur mit einem der Betätigungsglieder verbunden sind und daß das andere Betätigungsglied ortsfest gehalten ist. In diesem Fall geschieht sowohl die Übertragung der Drehbewegung als auch die der Verschiebebewegung, d.h. die Zug-Druck-Übertragung, über ein und dasselbe Betätigungsglied, wobei hierfür grundsätzlich sowohl die Betätigungsseele als auch der Betätigungsmantel in Frage kommen. Das jeweils andere Betätigungsglied dient dann lediglich als Führung für das kraftübertragende Betätigungsglied.

Alternativ dazu kann vorgesehen sein, daß der Betätigungshebel und das Koppelelement mit beiden Betätigungsgliedern in der Weise verbunden sind, daß mit der Bewegung des Betätigungshebels in dessen einer Richtung eine Verschiebebewegung wenigstens des einen Betätigungsgliedes und damit eine Bewegung des Koppelelements in dessen einer Richtung und daß mit der Bewegung des Betätigungshebels in dessen anderer Richtung eine Verdrehbewegung wenigstens des anderen Betätigungsgliedes und damit eine Bewegung des Koppelelements in dessen anderer Richtung bewirkbar ist. In diesem Fall findet eine Aufteilung der Kraftübertragung auf beide Betätigungsglieder statt. Dies ermöglicht es, zumindest eines der Betätigungsglieder an die Art der von ihm übertragenden Kraft speziell anzupassen.

Dabei sind auch bei dieser Aufteilung der Kraftübertragung auf beide Betätigungselemente verschiedene Ausführungsformen denkbar. So können der Betätigungshebel und das Koppelelement mit den Betätigungsgliedern in der Weise verbunden sein, daß mit der Bewegung des Betätigungshebels in dessen einer Richtung eine Verschiebebewegung ausschließlich des einen Betätigungsgliedes und damit eine Bewegung des Koppelelements in dessen einer Richtung und daß mit der Bewegung des Betätigungshebels in dessen anderer Richtung eine Verdrehbewegung ausschließlich des anderen Betätigungsgliedes und damit eine Bewegung des Koppelelements in dessen anderer Richtung bewirkbar ist. In diesem Fall hat also jedes Betätigungsglied nur eine Art von Kraft - sei es Zug und Druck oder sei es Torsion - zu übertragen, so daß die Betätigungsglieder der jeweiligen Art der Kraftübertragung speziell angepaßt werden können.

Alternativ dazu kann vorgesehen sein, daß der Betätigungshebel und das Koppelelement mit den Betätigungsgliedern in der Weise verbunden sind, daß mit der Bewegung des Betätigungshebels in dessen einer Richtung eine Verschiebebewegung des einen Betätigungsgliedes und damit eine Bewegung des Koppelelements in dessen einer Richtung und daß mit der Bewegung des Betätigungshebels in dessen anderer Richtung eine Verdrehbewegung beider Betätigungsglieder und damit eine Bewegung des Koppelelements in dessen anderer Richtung bewirkbar ist. In diesem Fall werden zur Übertragung von Torsionskräften beide Betätigungsglieder herangezogen, wodurch sich die Verdrehsteifigkeit erhöht. Im Gegensatz dazu können für die Übertragung der Verschiebebewegung beide Betätigungsglieder und für die Übertragung der Verdrehbewegung eines der Betätigungsglieder durch entsprechende Verbindung von Betätigungshebel und Koppelelement mit den Betätigungsgliedern bewirkt werden.

Für die Übertragung der Verschiebebewegung eignet sich in erster Linie die Betätigungsseele, da sie in dem Betätigungsmantel über die ganze Strecke geführt ist. Dies schließt nicht aus, daß hierfür auch der Betätigungsmantel verwendet wird. Vorzugsweise sollte dieser jedoch für die Übertragung der Verdrehbewegung herangezogen werden. Auch für die kombinierte Übertragung von Verdreh- und Verschiebebewegung eignet sich in erster Linie der Betätigungsmantel.

Gemäß einem weiteren Merkmal der Erfindung ist vorgesehen, daß das bewegbare Betätigungsglied bzw. die bewegbaren Betätigungsglieder in einer solchen Verbindung mit dem Koppelelement stehen, daß mit der Verschiebebewegung eine Verschwenkung des Koppelelements um eine Achse und mit der Verdrehbewegung eine Verschiebung des Koppelelements längs dieser Achse bewirkbar ist.

Was die Führung des Betätigungshebels angeht, wird gemäß der Erfindung vorgeschlagen, daß der Betätigungshebel um eine in dessen einer Richtung verlaufenden Achse schwenkbar in einem Lagerelement und dieses Lagerelement in einer Hebelhalterung schwenkbar um eine in der anderen Richtung verlaufenden Schwenkachse gelagert ist. Dabei sollte der Betätigungszug koaxial zur Schwenkachse des Lagerelements liegen und das Betätigungsglied bzw. die Betätigungsglieder für die Übertragung der Verdrehbewegung drehfest mit dem Lagerelement verbunden sein. Eine einfache Lagerung läßt sich in diesem Fall dadurch herstellen, daß der Betätigungsmantel schalthebelseitig eine starre Lagerhülse aufweist, über die das Lagerelement in der Hebelhalterung gelagert ist. Auf diese Weise bildet der Betätigungsmantel selbst die Lagerung in der Hebelhalterung.

Die Hebelhalterung hat zweckmäßigerweise U-Form mit beidseits hochstehenden U-Schenkeln, in denen das Lagerelement gelagert ist. Auch dieses kann U-Form mit beidseits hochstehenden U-Schenkeln haben, über die das Lagerelement dann an der Hebelhalterung gelagert ist.

In weiterer Ausgestaltung der Erfindung ist vorgesehen, daß das Koppelelement einen Schwenkhebel aufweist, an dem das die Verschiebebewegung ausführende Betätigungsglied angebracht ist und der um eine quer zur Schwenkachse des Koppelelements gerichteten Achse verschwenkbar gelagert ist. Diese Lagerung vermeidet Verbiegungen und Verspannungen bei einer Bewegung des Koppelelements in Richtung seiner Schwenkachse.

Es ist des weiteren vorgeschlagen, daß das bzw. die die Verdrehbewegung ausführende(n) Betätigungsglied(er) koppelelementseitig mit einem Übertragungshebel verbunden ist bzw. sind, der mit dem Koppelelement zusammenwirkt. Dabei sollte der Übertragungshebel derart formschlüssig mit dem Koppelelement verbunden sein, daß das Koppelelement in Bewegungsrichtung des Übertragungshebels mitgenommen, eine Schwenkbewegung des Koppelelements um seine Schwenkachse jedoch nicht behindert wird. Beispielsweise kann die Verbindung von Koppelelement und Übertragungshebel als Gabel auf der einen Seite und in die Gabel einfassendes Gleitstück auf der anderen Seite ausgebildet sein.

Um eine Justierung in diesem Bereich zu ermöglichen, sollte der Übertragungshebel in einen koppelelementseitigen Hebelabschnitt und einen betätigungszugseitigen Hebelabschnitt aufgeteilt sein, wobei die Hebelabschnitte in Bewegungsrichtung des Übertragungshebels gegeneinander verstellbar sind.

Nach der Erfindung ist ferner vorgesehen, daß koppelelementseitig eine Zughalterung vorgesehen ist, in der der Betätigungsmantel gelagert ist. Hierzu kann der Betätigungsmantel endseitig eine starre Lagerhülse aufweisen, über die er in der Zughalterung gelagert ist. An der Lagerhülse kann dann der Übertragungshebel drehfest befestigt sein, wenn der Betätigungsmantel für die Torsionskraftübertragung herangezogen wird.

In der Zeichnung ist die Erfindung an Hand eines Ausführungsbeispiels näher veranschaulicht. Es zeigen:
- Figur (1): die Seitenansicht einer Schalthebelanordnung mit Teillängsschnitt;
- Figur (2): die Frontansicht der Schalthebelanordnung gemäß Figur (1) mit Teilquerschnitt in der Ansicht "B";
- Figur (3): eine Seitenansicht einer Koppelelementanordnung;
- Figuren (4) bis (6): Frontansichten der Koppelelementanordnung gemäß Figur (3) in der Ansicht "C" und
- Figuren (7) bis (11): fünf Schalthebelanordnungen mit unterschiedlicher Kraftübertragung auf einen Drahtzug.

Die in den Figuren (1) und (2) dargestellte Schalthebelanordnung (1) hat einen geraden, in der gezeigten Stellung senkrecht stehenden, rohrförmigen Schalthebel (2), der obenseitig einen Schaltknopf (3) aufweist. Im oberen Drittel weist er eine Ringnut (4) auf, in die eine flexible Manschette (5) einfaßt, die den unteren Teil der Schalthebelanordnung nach der Montage in einem Fahrzeug abdeckt.

Der Schalthebel (2) wird von einer Lagerhülse (6) umfaßt, mit der er verschweißt ist. Über diese Lagerhülse (6) ist der Schalthebel (2) in einer Lagerwippe (7) um eine horizontale Achse in Schaltrichtung verschwenkbar gelagert. Die Lagerwippe (7) hat einen horizontalen Wippenboden (8), von dessen Längsseiten zwei Lagerschenkel (9, 10̸) hochstehen, von denen in Figur (1) einer weggeschnitten ist. Die Lagerschenkel (9, 10̸) umfassen im oberen Bereich die Lagerhülse (6). Jeweils von den Außenseiten her durchfassen die Lagerschenkel (9, 10̸) Lagerschrauben (11, 12), welche in die Lagerhülse (6) eingeschraubt sind und eine Verschwenkung des Schalthebels (2) in der Zeichnungsebene von Figur (1) erlauben.

An den Querseiten weist die Lagerwippe (7) ebenfalls hochgebogene Lagerschenkel (13, 14) auf. Über diese Lagerschenkel (13, 14) ist die Lagerwippe (7) um eine Schwenkachse (15) verschwenkbar in einer Schalthebelkonsole (16) gelagert.

Die Schalthebelkonsole (16) hat einen waagerechten Konsolenboden (17), von dessen Querseiten Lagerschenkel (18, 19) hochstehen, welche parallel und jeweils außenseitig zu den Lagerschenkeln (13, 14) der Lagerwippe (7) verlaufen. Der in Figur (1) rectsseitige Lagerschenkel (19) der Schalthebelkonsole (16) und des benachbarten Lagerschenkels (10̸) der Lagerwippe (7) durchfaßt eine Lagerschraube (20̸), welche durch eine Schraubenmutter (21) gehalten wird und eine Verschwenkung der Lagerwippe (7) um die Schwenkachse (15) erlaubt.

Den in Figur (1) linksseitigen Lagerschenkel (18) der Schalthebelkonsole (16) und den dortigen Lagerschenkel (9) der Lagerwippe (7) durchdringt das Ende eines Drahtzuges (22). Der Drahtzug (22) bat einen flexiblen Drahtzugmantel (23), der sich über die gesamte Länge des Drahtzuges (22) erstreckt und in dem eine Drahtlitze (24) verläuft. Über das Ende des Drahtzugmantels (23) ist eine metallische Lagerhülse (25) gestülpt, die von der Drahtlitze (24) durchzogen wird und drehfest mit dem Drahtzugmantel (23) verbunden ist. Die Lagerhülse (25) hat in dem Bereich, in dem sie den Lagerschenkel (18) der Schalthebelkonsole (16) durchdringt, kreisförmigen Querschnitt und ist dort drehbar gelagert. Am schalthebelseitigen Ende hat die Lagerhülse (25) einen Absatz und ist dort mehreckig gestaltet, wobei sie formschlüssig, d.h. verdrehfest in eine entsprechend gestaltete öffnung in dem Lagerschenkel (9) der Lagerwippe (7) einfaßt. Durch einen Clip (26) ist die Lagerhülse (25) in Längsrichtung unverschieblich gehalten. Auf Grund der Lagerfunktion der Lagerhülse (25) bildet sich eine Schwenkachse (15) aus, die koaxial zur Längsachse des Drahtzuges (22) liegt.

Die Drahtlitze (24) geht bis an das untere Ende des Schalthebels (2) heran und endet dort in einer Gabel (27). Diese umfaßt ein Verbindungsblech (28), das an dem Schalthebel (2) angeschweißt ist und ein Langloch (29) aufweist, durch das ein Gelenkbolzen (30̸) hindurchgeht, welcher sich zwischen den beiden Gabelschenkeln der Gabel (27) erstreckt. Auf diese Weise ist der Schalthebel (2) mit der Drahtlitze (24) gelenkig verbunden, wobei das Langloch (29) dafür sorgt, daß die Drahtlitze (24) bei einer Schaltbewegung des Schalthebels (2) in die beiden gestrichelt dargestellten Lagen nicht verbogen wird.

Innenseitig und koaxial zur Längsachse des Schalthebels (2) verläuft ein Blockierstift (31), der mit Hilfe einer obenseitigen Druckfeder (32) nach unten gedrückt wird. Das obere Ende des Blockierstiftes (31) ist über einen Querstift (33) mit einem Betätigungsring (34) verbunden, welcher den Schalthebel (2) außenseitig umfaßt und über den der Blockierstift (31) gegen die Wirkung der Druckfeder (32) angehoben werden kann. Untenseitig ragt der Blockierstift (31) in nichtangehobenem Zustand bis nahe an den Konsolenboden (17) über das Ende des Schalthebels (2) hinaus und durchdringt dabei einen Bodenschlitz (35) im Wippenboden (8). Der Bodenschlitz (35) sorgt dafür, daß der Schalthebel (2) auch bei unten vorstehendem Blockierstift (31) frei verschwenkbar um die Achse der Lagerhülse (6) bleibt. Auf dem Konsolenboden (17) ist ein Blockierstreifen (36) aufgeschweißt, der eine Querverschwenkung des Schalthebels (2) um die Schwenkachse (15) behindert, wenn sich der Blockierstift (31) in nichtangehobener Stellung befindet, wie dies die Figuren (1) und (2) zeigen.

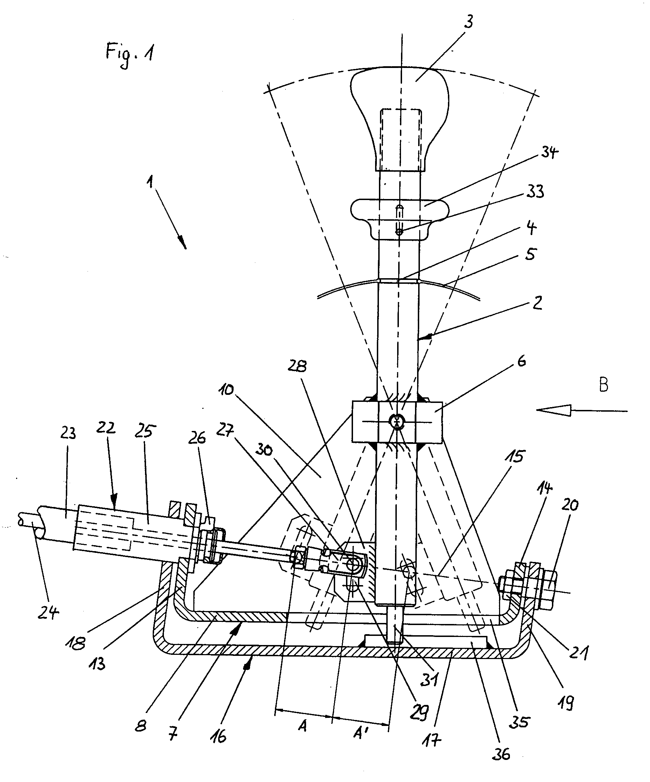

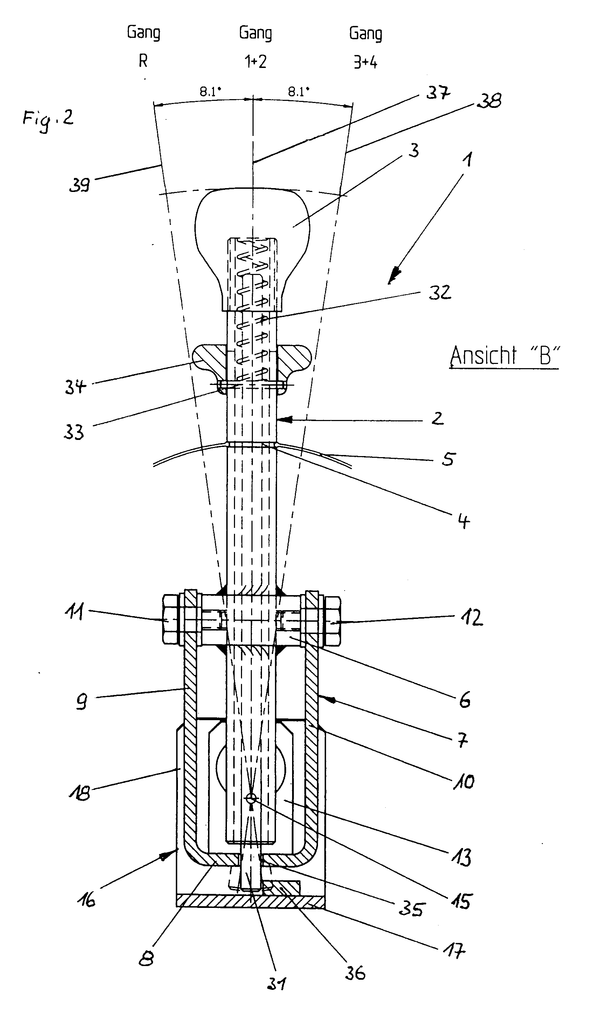

In den Figuren (1) und (2) befindet sich der Schalthebel (2) in einer Mittelebene (37). Durch die Schaltbewegung des Schalthebels (2) gegen den Uhrzeigersinn (Figur 1) wird eine Zugbelastung auf die Drahtlitze (24) ausgeübt und - wie noch weiter unten zu erläutern ist - der erste Gang geschaltet. Wird der Schalthebel (2) entgegengesetzt, d.h. im Uhrzeigersinn verschwenkt, wird auf die Drahtlitze (24) eine Druckkraft ausgeübt und auf diese Weise der zweite Gang geschaltet. Die Verschiebebewegungen der Drahtlitze (24) sind durch die Doppelpfeile A und A' dargestellt. Wird der Schalthebel (2) aus der gezeigten Stellung durch eine Wählbewegung in eine Außenebene (38) verschwenkt, dreht sich die Lagerwippe (7) um die Schwenkachse (15) mit. Über die formschlüssige Verbindung mit der Lagerhülse (25) des Drahtzuges (22) und die ebenfalls verdrehfeste Verbindung zwischen der Lagerhülse (25) und dem Drahtzugmantel (23) wird auf diese Weise eine Torsionskraft auf den Drahtzugmantel (23) ausgeübt, d.h. er wird um den mit 8,1° angegebenen Schwenkwinkel verdreht. In der Außenebene (38) kann dann der Schalthebel (2) zum Schalten des dritten Gangs gegen den Uhrzeigersinn und zum Schalten des vierten Gangs im Uhrzeigersinn um die Achse der Lagerhülse (6) längsverschwenkt werden. Auf diese Weise wird auch in der Außenebene (38) eine Zug- bzw. Druckkraft auf die Drahtlitze (24) übertragen und diese entsprechend im Drahtzugmantel (23) verschoben.

Eine Querverschwenkung des Schalthebels (2) aus der Außenebene (38) ist wegen des Blockierstiftes (31) und dem Blockierstreifen (36) normalerweise nur bis zur Mittelebene (37) möglich. Um auch den Rückwärtsgang schalten zu können, muß der Blockierstift (31) mit Hilfe des Betätigungsrings (34) so weit angehoben werden, daß sein Ende oberhalb des Blockierstreifens (36) zu liegen kommt. Dann kann der Schalthebel (2) in die Rückwärtsgangebene (39) querverschwenkt und dann entgegen dem Uhrzeigersinn längsverschwenkt werden, wobei die hierdurch auf die Drahtlitze (24) übertragene Zugbewegung das Schalten des Rückwärtsgangs zur Folge hat. Wird der Schalthebel (2) dann wieder in die Leerlaufebene gebracht, kann er in dieser Ebene wieder in die Mittelebene (37) oder sogar in die Außenebene (38) verschwenkt werden, wobei der Blockierstift (31) - wenn der Betätigungsring (34) losgelassen ist - selbsttätig in die gezeigte Ausgangsstellung zurückspringt mit der Folge, daß die Rückwärtsgangebene (39) wieder gesperrt ist.

In den Figuren (3) bis (6) ist das andere Ende des Drahtzuges (22) und die dortige Verbindung zu Betätigungsmitteln zu sehen, die die Schaltung innerhalb eines Getriebes, das hier nicht näher dargestellt ist, bewirken. Der Drahtzug (22) endet auch hier in einer starren Lagerhülse (40̸), in die der Drahtzugmantel (23) hineinragt, wobei Lagerhülse (40̸) und Drahtzugmantel (23) verdrehfest miteinander verbunden sind. Die Lagerhülse (40̸) ist in einer aus einem Blechteil geformten Endhalterung (41) drehbar gelagert. Die Endhalterung (41) hat einen Vertikalschenkel (42), an dem obenseitig etwas eingezogen eine Befestigungslasche (43) angeformt ist. Vertikalschenkel (42) und Befestigungslasche (43) haben Befestigungslöcher (44, 45), über die die Endhalterung (41) an einem Fahrzeugteil ortsfest mit Hilfe von Schrauben fixiert werden kann.

Vorne und hinten hat die Endhalterung (41) Lagerschenkel (46, 47). Der in Figur (3) linksseitige Lagerschenkel (46) hat ein Durchgangsloch, in dem die Lagerhülse (40̸) drehbar gelagert ist. Der andere Lagerschenkel (47) weist eine gabelförmige öffnung auf, in die die Lagerhülse (40̸) eingesetzt und durch eine ebenfalls eingesetzte Muffe (48) gesichert ist, innerhalb der die Lagerhülse (40̸) verdreht werden kann. Zur Sicherung in axialer Richtung ist ein Clip (49) vorgesehen, der in eine passende Nut innerhalb der Lagerhülse (40̸) einfaßt.

An der Lagerhülse (40̸) ist ein sich zu dieser im wesentlichen radial erstreckender Übertragungshebel (50̸) fixiert, der zweiteilig ausgebildet ist. Ein erster Hebelabschnitt (51) ist mit der Außenseite der Lagerhülse (40̸) verschweißt. Ein zweiter Hebelabschnitt (52) ist verdrehbar auf der Lagerhülse (40̸) gelagert und weist einen zweifach gebogenen Betätigungsarm (53) auf, an dessen freiem Ende eine Betätigungsgabel (54) sitzt. Das freie, außenliegende Ende des ersten Hebelabschnittes (51) ist über eine Schraube (55) mit dem zweiten Hebelabschnitt (52) fest verbunden, so daß eine Drehbewegung der Lagerhülse (40̸) über den ersten Hebelabschnitt (51) auf den zweiten Hebelabschnitt (52) und damit auch auf den Betätigungsarm (53) übertragen wird. Dabei durchfaßt die Schraube (55) einen bogenförmigen Schlitz (56), dessen Bogen einen Radius hat, der dem Abstand zur Mittelachse der Lagerhülse (40̸) entspricht. Auf diese Weise ist eine Justierung der beiden Hebelabschnitte (51, 52) zueinander in Umfangsrichtung und damit eine Einstellung einer Ausgangsstellung der Betätigungsgabel (54) möglich.

Die Betätigungsgabel (54) wirkt auf ein Koppelelement (57). Das Koppelelement (57) ragt mit einem bogenförmigen Gleitstück (58) in die Betätigungsgabel (54) hinein. Das Koppelelement (57) sitzt auf einer Getriebeeingangsstange (59) und ist auf dieser drehfest und verschiebefest fixiert.

An der Unterseite weist das Koppelelement (57) zwei angeschweißte Lagerringe (60̸, 61) auf, die von einem Lagerbolzen (62) durchdrungen sind. Auf dem Lagerbolzen (62) sitzt zwischen den Lagerringen (60̸, 61) frei drehbar eine Lagerhülse (63). An deren Unterseite ist ein Schwenkhebel (64) angeschweißt. An dessen freiem Ende weist er ein senkrecht verlaufendes Langloch (65) auf.

Der Schwenkhebel (64) ist mit der Drahtlitze (24) des Drahtzuges (22) über eine endseitig an der Drahtlitze (24) angebrachte Gabel (65) verbunden, die den Schwenkhebel (64) umfaßt. Die Verbindung wird durch einen Gabelbolzen (67) hergestellt, der das Langloch (65) durchfaßt und mit den Schenkeln der Gabel (66) verbunden ist.

In der in den Figuren (3) und (4) gezeigten Stellung, die mit der Stellung des Schalthebels (2) in den Figuren (1) und (2) korrespondiert, befindet sich der Schwenkhebel (64) in einer senkrechten Stellung, und zwar der Neutral- bzw. Leerlaufstellung. Es ist kein Gang geschaltet. Der Betätigungsarm (53) hat mit der Betätigungsgabel (54) eine Stellung, die einen Schaltvorgang in den ersten oder zweiten ermöglicht. Dies kann - wie oben beschrieben - durch Verschwenkung des Schalthebels in der Mittelebene (37), d. h. durch eine Schaltbewegung geschehen, wodurch die Drahtlitze (24) in Zugrichtung für den ersten Gang und in Druckrichtung für den zweiten Gang verschoben wird. Die Verschiebebewegung wird auf den Schenkhebel (64) entsprechend übertragen, d.h. für den ersten Gang entgegen dem Uhrzeigersinn und für den zweiten Gang im Uhrzeigersinn, und zwar jeweils um die angezeigten 17°.

Wird der Schalthebel (2) aus der Mittelebene (37) in die Rückwärtsgangebene (39) zum Schalten des Rückwärtsgangs in der oben beschriebenen Weise querverschwenkt, wird die Querverschwenkung auf die Lagerwippe (7) und von ihr auf die Lagerhülse (25) und damit auf den Drahtzugmantel (23) übertragen. Dieser wiederum überträgt die Verdrehbewegung auf die Lagerhülse (40̸), welche den ersten Hebelabschnitt (51) um die angegebenen 6,8° mitnimmt. Dieser überträgt die Schwenkbewegung auf den zweiten Hebelabschnitt (52) und damit auf den Betätigungsarm (53) und die Betätigungsgabel (54). Hierdurch werden das Koppelelement (57) und die Getriebeeingangsstange (59) in Figur (3) senkrecht zur Zeichnungsebene verschoben. Diese Verschiebung ist in Figur (5) im Vergleich zu Figur (4) erkennbar. Dabei kann der Schwenkhebel (64) auf Grund seiner drehbaren Lagerung ausweichen, indem er sich schrägstellt. Hierdurch wird vermieden, daß das aus der Lagerhülse (40̸) herausragende Ende der Drahtlitze (24) verbogen wird.

Die Getriebeeingangsstange (59) befindet sich dann in einer Stellung, in der der Rückwärtsgang eingeschaltet werden kann. Dies geschieht durch Längsverschwenkung des Schalthebels (2) entgegen dem Uhrzeigersinn mit der Folge, daß auf die Drahtlitze (24) eine Zugkraft ausgeübt wird, die den Schwenkhebel (64) entgegen dem Uhrzeigersinn verschwenkt und damit das Koppelelement (57) und mit ihm die Getriebeeingangsstange (59) in gleicher Richtung verdreht.

Soll der dritte oder vierte Gang geschaltet werden, wird der Schalthebel (2) in der schon oben beschriebenen Weise in die Außenebene (38) querverschwenkt. Diese Verschwenkung führt zu einer Verdrehung des Drahtzugmantels (23) und damit der Lagerhülse (40̸). Diese wiederum verschwenkt den Übertragungshebel (50̸) in einer Richtung, die entgegengesetzt der Richtung bei Verschwenkung in die Rückwärtsgangebene (39) geht. Das Koppelelement (57) und die Getriebeeingangsstange (59) werden entsprechend umgekehrt verschoben und gelangen auf diese Weise in eine Stellung, in der im Getriebe das Schalten des dritten oder vierten Gangs möglich ist.

Der Schaltvorgang wird dann durch Längsverschwenkung des Schalthebels (2) in der Zeichnungsebene gemäß Figur (1) bewirkt, und zwar für den dritten Gang durch Längsverschwenkung entgegen dem Uhrzeigersinn und folglich durch Zugausübung auf die Drahtlitze (24) und damit Verschwenkung des Schwenkhebels (64) entgegen dem Uhrzeigersinn. Für den vierten Gang wird der Schalthebel (2) im Uhrzeigersinn bewegt mit der Folge, daß auf die Drahtlitze (24) Druck ausgebübt und diese in Druckausübungsrichtung verschoben wird. Der Schwenkhebel (64) wird dann im Uhrzeigersinn verschwenkt. Figur (6) zeigt die dann eingenommene Stellung im Unterschied zu den Stellungen gemäß den Figuren (4) und (5).

Bei dem in den Figuren (1) bis (6) dargestellten Ausführungsbeispiel ist die Kraftübertragung zwischen Schalthebel (3) und Koppelelement (57) derart aufgeteilt, daß der Drahtzugmantel (23) allein die Torsionskräfte aufnimmt und der Drahtzug (22) allein die Zug- und Druckkräfte. Es sind aber auch andere Aufteilungen möglich, die sich aus den Darstellungen gemäß den Figuren (7) bis (11) ergeben. Diese zeigen verschiedene Schaltanordnungen (71, 72, 73, 74, 75), wobei in der nachstehenden Beschreibung gleiche oder funktionsgleiche Teile mit übereinstimmenden Bezugsziffern bezeichnet werden.

Die Schaltanordnungen (71, 72, 73, 73, 75) weisen jeweils eine U-förmige Schaltkonsole (76) mit an ihren Querseiten vertikal hochgebogenen Lagerschenkeln (77, 78) auf. Innerhalb der Schaltkonsole (76) ist jeweils eine Lagerwippe (79) ähnlich wie bei dem Ausführungsbeispiel gemäß den Figuren (1) und (2) gelagert. Die Lagerwippe (79) hat hierzu an den Querseiten hochstehende Lagerschenkel (80̸, 81), welche parallel und benachbart zu den Lagerschenkeln (77, 78) der Schaltkonsole (76) verlaufen. Die nicht näher dargestellten Lager lassen eine Verschwenkung der Lagerwippe (90̸) gegenüber der Schaltkonsole (76) jeweils um die Schwenkachse (82) zu.

Die Lagerwippen (79) haben an ihren Längsseiten hochstehende, weitere Lagerschenkel (83), von denen hier der jeweils in der Ansicht vorn liegende Lagerschenkel weggelassen ist, um die Ansicht in den von beiden Lagerschenkeln (83) jeweils umschlossenen Raum zu ermöglichen. Zwischen den Lagerschenkeln (83) ist in ähnlicher Weise wie bei der Ausführung gemäß den Figuren (1) und (2) ein SAchalthebel (84) in einem Lager (85) in Längsrichtung verschwenkbar gelagert. Die Schwenkbereiche sind strichpunktiert angegeben. Die Achse des Lagers (85) verläuft jeweils senkrecht zur Zeichnungsebene.

Von der in diesen Ansichten jeweils linken Seite kommt ein Drahtzug (86). Er hat einen Drahtzugmantel (87), welcher drehfest mit einer Endhülse (88) verbunden ist. Aus dem freien Ende der Endhülse (88) tritt noch ein kurzes Stück Drahtzugmantel (87) und jeweils eine Drahtlitze (89) heraus, die in einem Endauge (90̸) ausläuft, welches eine verdrehfeste Anbringung ermöglicht.

Die in den Figuren (7) bis (11) dargestellten Ausführungsbeispiele unterscheiden sich wie folgt.

Bei dem Ausführungsbeispiel gemäß Figur (7) ist die Endhülse (88) - ähnlich wie bei dem Ausführungsbeispiel gemäß den Figuren (1) und (2) - drehbar in dem Lagerschenkel (77) der Schaltkonsole (76) gelagert, jedoch drehfest mit dem Lagerschenkel (80̸) der Lagerwippe (79) verbunden. Dies hat zur Folge, daß bei einer Querverschwenkung des Schalthebels (84) in Wählrichtung zwecks Veränderung der Schaltebene die hierdurch ausgelöste Schwenkbewegung der Lagerwippe (79) um die Schwenkachse (82) auf den Drahtzugmantel (87) übertragen wird.

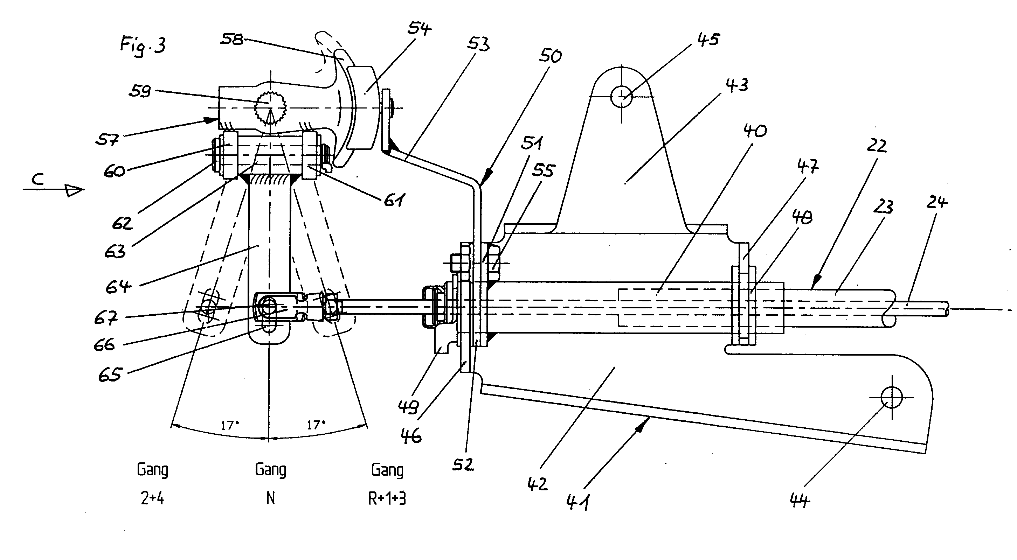

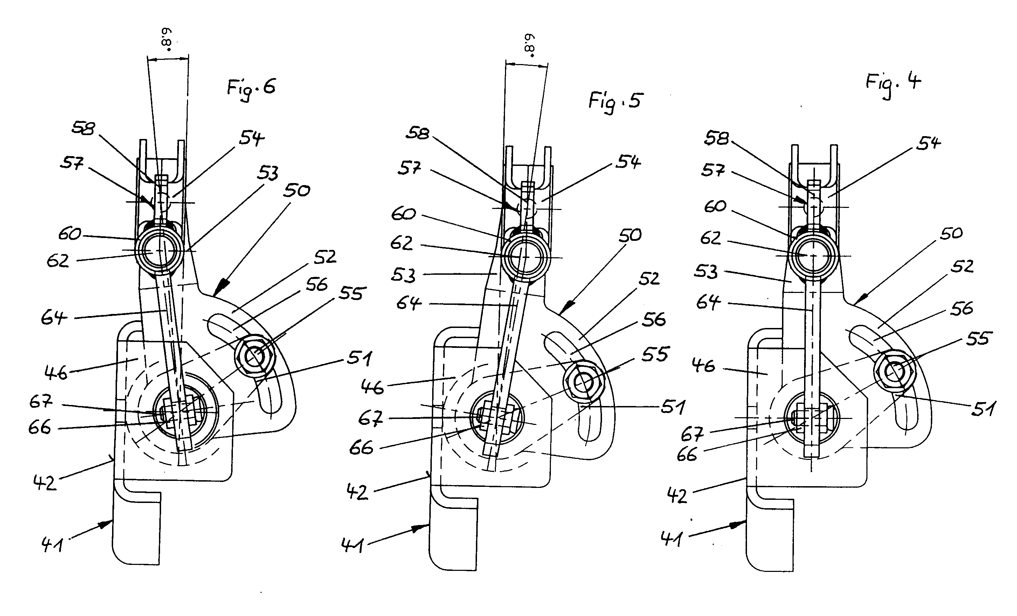

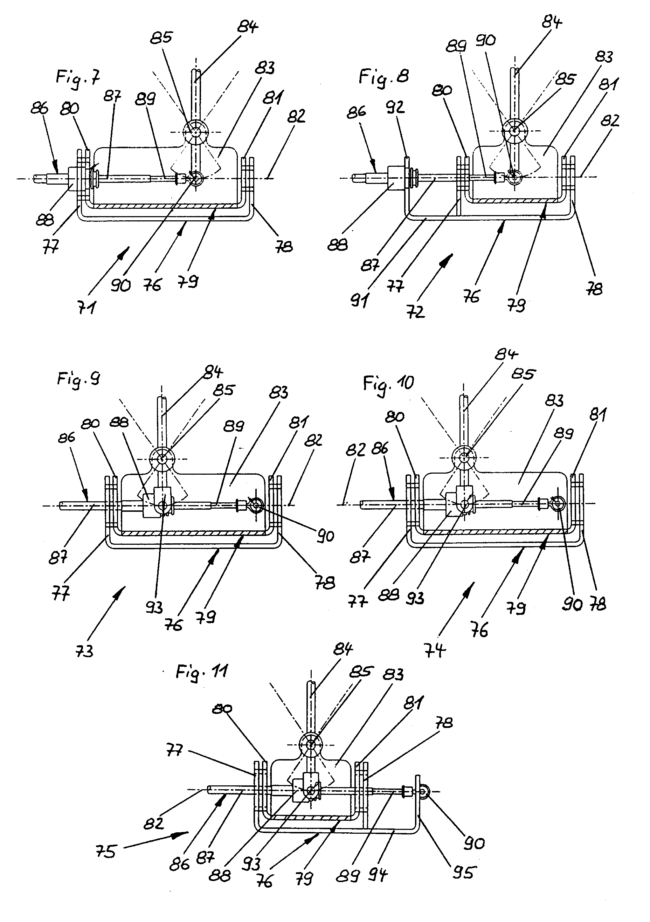

Im Unterschied zu der Ausführung gemäß den Figuren (1) und (2) ist hier die Drahtlitze (89) über das Endauge (90̸) verdrehfest an dem Schalthebel (84) angelenkt. Eine Querverschwenkung des Schalthebels (84) hat deshalb auch eine Verdrehung der Drahtlitze (89) zur Folge. Die Veränderung einer Schaltebene führt auf diese Weise zu einer Verdrehbewegung sowohl des Drahtzugmantels (87) als auch der Drahtlitze (89). Damit die Verdrehbewegung der Drahtlitze (89) auch auf das Koppelelement (57) (Figur 3) übertragen wird, müßte die Drahtlitze (89) am dortigen Ende ebenfalls einen Betätigungshebel aufweisen, der mit dem Übertragungshebel (50̸) in der Weise zusammenwirkt, daß die auch von der Drahtlitze (89) übertragene Kraft an das Koppelelement (57) weitergegeben wird.

Für den Schaltvorgang wird der Schalthebel (84) in der Zeichnungsebene längsverschwenkt, wie strichpunktiert angedeutet. Hierdurch werden auf die Drahtlitze (89) Zug- oder Druckkräfte übertragen, die eine entsprechende Verschiebebewegung zur Folge haben. In diesem Fall hat also die Drahtlitze (89) eine Doppelfunktion, da sie sowohl zur Übertragung von Zug- und Druckkräften als auch zur Übertragung von Torsionskräften bestimmt ist.

Bei dem Ausführungsbeispiel gemäß Figur (8) hat die Schaltkonsole (76) einen Fortsatz (91) mit hochgebogenem Halteschenkel (92), in dem die Endhülse (88) drehtfest gehalten ist. Die Drahtlitze (89) durchdringt den Lagerschenkel (77) der Schaltkonsole (76) und den Lagerschenkel (80̸) der Lagerwippe (79) und ist über das Endauge (90̸) drehfest mit dem Schalthebel (84) verbunden.

In diesem Fall ist die Drahtlitze (89) für die Übertragung aller Bewegungen bestimmt, d.h. sie wird beim Einschalten eines Gangs in Längsrichtung verschoben und beim Wechseln einer Schaltebene verdreht. Damit letztere auf das Koppelelement (57) übertragen wird, müßte das dortige Ende der Drahtlitze (89) mit dem Übertragungshebel (50̸) verbunden werden. Der Übertragungshebel (50̸) darf dann nicht an der dortigen Lagerhülse (40̸) fixiert sein. Der Drahtzugmantel (87) hat bei dieser Ausführung nur die Funktion einer Führung, wird also nicht zur Kraftübertragung herangezogen.

Bei dem Ausführungsbeispiel gemäß Figur (9) durchdringt der Drahtzug (86) den linksseitigen Lagerschenkel (77) der Schaltkonsole (76) und auch den dortigen Lagerschenkel (80̸) der Lagerwippe (79). Seine Endhülse (88) ragt in den Raum zwischen den beiden Lagerschenkeln (83) der Lagerwippe (79) hinein. Am unteren Ende des Schalthebels (84) ist eine Schalthebelgabel (83), angebracht, die mit der Endhülse (88) derart zusammenwirkt, daß der Drahtzugmantel (87) beim Einlegen eines Gangs und der damit verbundenen Längsschwenkbewegung des Schalthebels (84) eine Verschiebung des Drahtzugmantels (87) ausführt, daß jedoch bei einer Verschwenkung des Schalthebels (84) zwecks Wechsel einer Schaltebene keine Verdrehung des Drahtzugmantels (87) bewirkt wird. Entsprechend dient der Drahtzugmantel (87) lediglich der Zug-Druck-Übertragung. Folglich muß das andere, hier nicht dargestellte Ende des Drahtzugmantels (87) mit dem Schwenkhebel (64) des Koppelelements (57) verbunden sein.

Die Drahtlitze (89) ist mit ihrem Endauge (90̸) drehfest an den beiden Lagerschenkeln (83) der Lagerwippe (79) befestigt. Wird der Schalthebel (84) in Querrichtung zwecks Wechsel einer Schaltebene verschwenkt, hat dies zur Folge, daß die Schwenkbewegung über die Lagerwippe (79) auf die Drahtlitze (89) übertragen wird. Am anderen Ende müßte die Drahtlitze (89) dann mit dem Übertragungshebel (50̸) verbunden werden, damit die Verdrehbewegung über ihn auf das Koppelelement (57) übertragen wird. Bei diesem Ausführungsbeispiel ist die Kraftübertragung gegenüber dem Ausführungsbeispiel gemäß den Figuren (1) und (2) vertauscht, denn der Drahtzugmantel (87) dient allein der Zug-Druck-Übertragung und die Drahtlitze (89) allein der Torsionsübertragung.

Das Ausführungsbeispiel gemäß Figur (10̸) unterscheidet sich von dem gemäß Figur (9) lediglich dadurch, daß die Schalthebelgabel (93) verdrehfest mit der Endhülse (88) gekoppelt ist. Dies hat zur Folge, daß der Drahtzugmantel (87) nicht nur der Übertragung von Zug- und Druckkräften dient, sondern beim Wechsel der Gangebene zusammen mit der Drahtlitze (89) auch verdreht wird. Die Torsionsbewegung wird also auf beide Teile des Drahtzuges (86) übertragen, während die Verschiebebewegung nur von dem Drahtzugmantel (87) ausgeführt wird.

Bei dem Ausführungsbeispiel gemäß Figur (11) liegt ebenfalls eine Vertauschung vor, und zwar im Vergleich zu dem Ausführungsbeispiel gemäß Figur (8). Der Schalthebel (84) hat eine Schalthebelgabel (93), welche dreh- und verschiebefest mit der Endhülse (88) des Drahtzugmantels (87) verbunden ist. Die Schaltkonsole (76) hat rechtsseitig einen Fortsatz (94) mit hochgestelltem Halteschenkel (95). In diesem ist das Endauge (90̸) der Drahtlitze (89) verdreh- und verschiebefest gehalten. In diesem Fall dient die Drahtlitze (89) lediglich der Führung des Drahtzugmantels (87), der bei einem Schaltvorgang axial verschoben und bei einem Wechsel der Schaltebene verdreht wird. Entsprechend muß der Drahtzugmantel (87) am anderen Ende einerseits mit dem Schwenkhebel (64) und andererseits mit dem Übertragungshebel (50̸) derart verbunden werden, daß durch eine Veschiebebewegung der Schwenkhebel (64) und durch eine Verdrehbewegung das Koppelelement (57) mit der Getriebeeingangsstange (59) bewegt werden.

## Patentansprüche

1. Betätigungseinrichtung, insbesondere für Wechselgetriebe, mit einem Übertragungsmechanismus (22, 86), der einerends mit einem Betätigungshebel, insbesondere Schalthebel (2, 84), und anderenends mit einem Koppelelement (57) für die Verbindung mit einem zu betätigenden Organ, insbesondere Getriebegestänge (59), versehen ist, wobei der Betätigungshebel (2, 84) in einer ersten Richtung in mehreren Betätigungsebenen (37, 38, 39) bewegbar und in jeder Betätigungsebene (37, 38, 39) in einer zweiten Richtung verschwenkbar ist und die Bewegungen des Betätigungshebels (2, 84) in beiden Richtungen mit Hilfe des Übertragungsmechanismusses (22, 86) derart auf das Koppelelement (57) übertragbar sind, daß es ebenfalls in zwei Richtungen bewegbar ist,
dadurch gekennzeichnet, daß der Übertragungsmechanismus einen Betätigungszug (22, 86) mit einer Betätigungsseele (24, 89) und einen diese umgebenden Betätigungsmantel (23, 87) als Betätigungsglieder aufweist, und daß der Betätigungshebel (2, 84) und das Koppelelement (57) mit wenigstens einem der Betätigungsglieder (23, 24; 87 in Fig. 7, 9, 10̸ und 11, 89 in Fig. 7 bis 10̸) derart verbunden ist, daß mit der Bewegung des Betätigungshebels (2, 84) in dessen einer Richtung eine Verschiebebewegung wenigstens eines Betätigungsgliedes (23, 24; 87 in Fig. 9 bis 11, 89 in Fig. 7 und 8) und damit eine Bewegung des Koppelelements (57) in dessen einer Richtung und daß mit der Bewegung des Betätigungshebels (2, 84) in dessen anderer Richtung eine Verdrehbewegung wenigstens eines Betätigungsgliedes (23, 24; 87 in Fig. 7, 10̸ und 11, 89 in Fig. 7 bis 10̸) und damit eine Bewegung des Koppelelements (57) in dessen anderer Richtung bewirkbar ist.

2. Betätigungseinrichtung nach Anspruch 1,
dadurch gekennzeichnet, daß Betätigungshebel (84 in Fig. 8 und 11) und Koppelelement (57) nur mit einem der Betätigungsglieder (87 in Fig. 11, 89 in Fig. 8) verbunden sind und daß das andere Betätigungsglied (89 in Fig. 11, 87 in Fig. 8) ortsfest gehalten ist.

3. Betätigungseinrichtung nach Anspruch 1,
dadurch gekennzeichnet, daß der Betätigungshebel (2, 84 min Fig. 7, 9 und 10̸) und das Koppelelement (57) mit beiden Betätigungsgliedern (23, 24; 87, 89) in der Weise verbunden sind, daß mit der Bewegung des Betätigungshebels (2, 84 in Fig. 7, 9, und 10̸) in dessen einer Richtung eine Verschiebebewegung wenigstens des einen Betätigungsgliedes (23, 24; 87 in Fig. 9 und 10̸, 89 in Fig. 7) und damit eine Bewegung des Koppelelements (57) in dessen einer Richtung und daß mit der Bewegung des Betätigungshebels (2, 84 in Fig. 7, 9 und 10̸) in dessen anderer Richtung eine Verdrehbewegung wenigstens des anderen Betätigungsgliedes (23, 24; 87 in Fig. 7 und 10̸, 89 in Fig. 7, 9 und 10̸) und damit eine Bewegung des Koppelelements (57) in dessen anderer Richtung bewirkbar ist.

4. Betätigungseinrichtung nach Anspruch 3,
dadurch gekennzeichnet, daß der Betätigungshebel (2) und das Koppelelement (57) mit den Betätigungsgliedern (23, 24) in der Weise verbunden sind, daß mit der Bewegung des Betätigungshebels (2) in dessen einer Richtung eine Verschiebebewegung ausschließlich des einen Betätigungsgliedes (24) und damit eine Bewegung des Koppelelements (57) in dessen einer Richtung und daß mit der Bewegung des Betätigungshebels (2) in der anderen Richtung eine Verdrehbewegung ausschließlich des anderen Betätigungsgliedes (23) und damit eine Bewegung des Koppelelements (57) in dessen anderer Richtung bewirkbar ist.

5. Betätigungseinrichtung nach Anspruch 3,
dadurch gekennzeichnet, daß der Betätigungshebel (84 in Fig. 7 und 10̸) und das Koppelelement (57) mit den Betätigungsgliedern (87 und 89 in Figuren 7 und 10̸) in der Weise verbunden sind, daß mit der Bewegung des Betätigungshebels (84 in Fig. 7 und 10̸) in dessen einer Richtung eine Verschiebebewegung des einen Betätigungsgliedes (87 in Fig. (7, 89 in Fig. 10̸) und damit eine Bewegung des Koppelelements (57) in dessen einer Richtung und daß mit der Bewegung des Betätigungshebels (84) in dessen anderer Richtung eine Verdrehbewegung beider Betätigungsglieder (87 und 89 in Fig. 7 und 10̸) und damit eine Bewegung des Koppelelements in dessen anderer Richtung bewirkbar ist.

6. Betätigungseinrichtung nach Anspruch 3,
dadurch gekennzeichnet, daß der Betätigungshebel und das Koppelelement mit den Betätigungsgliedern in der Weise verbunden sind, daß mit der Bewegung des Betätigungshebels in dessen einer Richtung eine Verschiebebewegung beider Betätigungsglieder und damit eine Bewegung des Koppelelements in dessen einer Richtung und daß mit der Bewegung des Betätigungshebels in dessen anderer Richtung eine Verdrehbewegung eines der Betätigungsglieder und damit eine Bewegung des Koppelelements in dessen anderer Richtung bewirkbar ist.

7. Betätigungseinrichtung nach einem der Ansprüche 1 bis 6, dadurch gekennzeichnet, daß der Betätigungshebel (2; 84 in Fig. 7 und 8) mit der Betätigungsseele (24; 89 in Fig. 7 und 8) zwecks Übertragung der Verschiebebewegung verbunden ist.

8. Betätigungseinrichtung nach einem der Ansprüche 1 bis 7, dadurch gekennzeichnet, daß der Betätigungshebel (2; 84 in Fig. 10̸ und 11) mit dem Befestigungsmantel (23; 87 in Fig. 7, 10̸ und 11) zwecks Übertragung der Verdrehbewegung verbunden ist.

9. Betätigungseinrichtung nach einem der Ansprüche 5 bis 8, dadurch gekennzeichnet, daß der Betätigungshebel (84 in Fig. 10̸ und 11) mit dem Betätigungsmantel (87 in Fig. 10̸ und 11) zwecks Übertragung von Verdreh- und Verschiebebewegung verbunden ist.

10. Betätigungseinrichtung nach einem der Ansprüche 1 bis 9, dadurch gekennzeichnet, daß das bewegbare Betätigungsglied (89 in Fig. 8); 87 in Fig. 11) bzw. die bewegbaren Betätigungsglieder (23, 24; 87 in Fig. 7, 9, 10̸ und 11; 89 in den Fig. 7 bis 10̸) in einer solchen Verbindung mit dem Koppelelement (57) stehen, daß mit der Verschiebebewegung eine Verschwenkung des Koppelelements (57) um eine Achse und mit der Verdrehbewegung eine Verschiebung des Koppelelements (57) längs dieser Achse bewirkbar ist.

11. Betätigungseinrichtung nach einem der Ansprüche 1 bis 10̸, dadurch gekennzeichnet, daß der Betätigungshebel (2, 84) um eine in dessen einer Richtung verlaufenden Achse schwenkbar in einem Lagerelement (7, 79) und dieses Lagerelement (7, 79) in einer Schalthebelhalterung (16, 76) schwenkbar um eine in der anderen Richtung verlaufenden Schwenkachse (15, 82) gelagert sind.

12. Betätigungseinrichtung nach Anspruch 11,
dadurch gekennzeichnet, daß der Betätigungszug (22, 86) koaxial zur Schwenkachse (15, 82) des Lagerelements (7, 79) liegt und daß das Betätigungsglied (23; 87 in Fig. 8 und 9; 89 in Fig. 11) bzw. die Betätigungsglieder (87, 89 in Fig. 7 und 10̸) für die Übertragung der Verdrehbewegung drehfest mit dem Lagerelement (79) verbunden ist bzw. sind.

13. Betätigungseinrichtung nach Anspruch 11 oder 12,
dadurch gekennzeichnet, daß der Betätigungsmantel (23) schalthebelseitig eine starre Lagerhülse (25) aufweist, über die das Lagerelement (7) in der Hebelhalterung (16) gelagert ist.

14. Betätigungseinrichtung nach einem der Ansprüche 11 bis 13, dadurch gekennzeichnet, daß die Hebelhalterung (16, 76) U-Form mit beidseits hochstehenden U-Schenkeln (18, 19; 77, 78) hat und daß das Lagerelement (7, 79) in den U-Schenkeln (18, 19; 77, 78) gelagert ist.

15. Betätigungseinrichtung nach Anspruch 14,
dadurch gekennzeichnet, daß das Lagerelement (7, 79) U-Form mit beidseits hochstehenden U-Schenkeln (13, 14; 80̸, 81) hat, über die das Lagerelement (7, 79) an der Hebelhalterung (16, 76) gelagert ist.

16. Betätigungseinrichtung nach einem der Ansprüche 1 bis 15, dadurch gekennzeichnet, daß das Koppelelement (57) einen Schwenkhebel (64) aufweist, an dem das die Verschiebebewegung ausführende Betätigungsglied (24; 89 in Fig. 7 und 8, 87 in Fig. 9 bis 11) angebracht ist und der um eine quer zur Schwenkachse des Koppelelements (57) gerichteten Achse (62) verschwenkbar gelagert ist.

17. Betätigungseinrichtung nach einem der Ansprüche 1 bis 16, dadurch gekennzeichnet, daß das bzw. die die Verdrehbewegung ausführende(n) Betätigungsglied(er) (23; 89 in Fig. 7, 10̸ und 11, 87 in Fig. 7 bis 10̸) koppelelementseitig mit einem Übertragungshebel (50̸) verbunden ist bzw. sind, der mit dem Koppelelement (57) zusammenwirkt.

18. Betätigungseinrichtung nach Anspruch 17,
dadurch gekennzeichnet, daß der Übertragungshebel (50̸) derart formschlüssig mit dem Koppelelement (57) verbunden ist, daß das Koppelelement (57) in Bewegungsrichtung des Übertragungshebels (50̸) mitgenommen, eine Schwenkbewegung des Koppelelements (57) um seine Schwenkachse jedoch nicht behindert wird.

19. Betätigungseinrichtung nach Anspruch 18,
dadurch gekennzeichnet, daß die Verbindung von Koppelelement (57) und Übertragungshebel (50̸) als Gabel (54) auf der einen Seite und in die Gabel (54) einfassendes Gleitstück (58) auf der anderen Seite ausgebildet ist.

20. Betätigungseinrichtung nach einem der Ansprüche 17 bis 19, dadurch gekennzeichnet, daß der Übertragungshebel (50̸) in einen koppelelementseitigen Hebelabschnitt (52) und einen betätigungszugseitigen Hebelabschnitt (51) aufgeteilt ist, wobei die Hebelabschnitte (51, 52) in Bewegungsrichtung des Übertragungshebels (50̸) gegeneinander verstellbar sind.

21. Betätigungseinrichtung nach einem der Ansprüche 1 bis 20̸, dadurch gekennzeichnet, daß koppelelementseitig eine Zughalterung (41) vorgesehen ist, in der der Betätigungsmantel (23) gelagert ist.

22. Betätigungseinrichtung nach Anspruch 21,
dadurch gekennzeichnet, daß der Betätigungsmantel (23) endseitig eine starre Lagerhülse (40̸) aufweist, über die er in der Zughalterung (41) gelagert ist.

23. Betätigungseinrichtung wenigstens nach Anspruch 22 und einem der Ansprüche 17 bis 20̸,
dadurch gekennzeichnet, daß der Übertragungshebel (50̸) drehfest an der Lagerhülse (40̸) befestigt ist.
